# EUROPÄISCHE PATENTSCHRIFT

(11) **EP 3 765 374 B1**
(45) Veröffentlichungstag und Bekanntmachung des Hinweises auf die Patenterteilung: **20.04.2022**
(21) Anmeldenummer: 19711849.0
(22) Anmeldetag: 11.03.2019
(51) Int. Cl.: B65D 33/25, A44B 19/16

(54) **ANDOCKVERSCHLUSS UND ANDOCKVERFAHREN ZUM KONTAMINATIONSFREIEN VERBINDEN EINER ERSTEN FLEXIBLEN UMHÜLLUNG MIT EINER ZWEITEN FLEXIBLEN UMHÜLLUNG, SOWIE UMHÜLLUNG MIT EINEM SOLCHEN ANDOCKVERSCHLUSS UND VERWENDUNG EINES SOLCHEN ANDOCKVERSCHLUSSES**
DOCKING SEAL AND DOCKING METHOD FOR CONTAMINATION-FREE CONNECTION OF A FIRST FLEXIBLE CASING TO A SECOND FLEXIBLE CASING, FLEXIBLE CASING WITH SUCH A DOCKING SEAL AND USE OF SUCH A DOCKING SEAL
VERROUILLAGE D'ACCOUPLEMENT ET PROCÉDÉ D'ACCOUPLEMENT POUR LE RACCORDEMENT SANS CONTAMINATION D'UNE PREMIÈRE GAINE SOUPLE À UNE DEUXIÈME GAINE SOUPLE AINSI QUE GAINE SOUPLE AVEC UN TEL VERROUILLAGE D'ACCOUPLEMENT ET UTILISATION D'UN TEL VERROUILLAGE D'ACCOUPLEMENT

(30) Priorität: 12.03.2018 DE 102018105676
(43) Veröffentlichungstag der Anmeldung: 20.01.2021
(73) Patentinhaber: Andocksysteme G. Untch GmbH, 79410 Badenweiler (DE)
(72) Erfinder: UNTCH, Günter, 79410 Badenweiler (DE)
(74) Vertreter: Patentanwälte Walther Hinz Bayer PartGmbB
(86) Internationale Anmeldenummer: PCT/EP2019/056058
(87) Internationale Veröffentlichungsnummer: WO 2019/175121

(56) Entgegenhaltungen:
- WO-A1-2005/070776
- DE-A1-102013 000 011
- DE-U1-202010 015 525
- JP-A- 2011 087 875

## Beschreibung

Die vorliegende Erfindung betrifft ein Andockverschluss und Andockverfahren zum kontaminationsfreien Verbinden einer ersten flexiblen Umhüllung mit einer zweiten flexiblen Umhüllung. Weiterhin betrifft die Erfindung eine erste und zweite flexible Umhüllung, welche mit einem derartigen Andockverschluss miteinander kontaminationsfrei verbindbar sind. Darüber hinaus betrifft die Erfindung die Verwendung eines derartigen Andockverschlusses zum sicheren Handhaben von toxisch wirkenden, staubförmigen Feststoffen.

Bekannte Absperrorgane, beispielsweise ein Doppelteller, sind jeweils in einem Gehäuse gelagert und derart in dem jeweiligen Gehäuse angeordnet, dass die Absperrorgane in der Andockstellung mit Schnittstellenflächen zumindest teilflächig aneinander anliegen und gegeneinander abgedichtet sind.

Ein derartiges Absperrorgan wie beispielsweise DE 10 2011 009 303 A1 ist mittels gewichtiger Gehäuse und steifer Lagerungen auf einen Drehachsenbereich beschränkt mit Kräften beaufschlagbar, um möglichst dicht und vollumfänglich aneinander anzuliegen.

In einem anderen technischen Gebiet der Behälterverschlusstechnik ist beispielsweise in WO 2014/076208 A1 ein abgedichteter Behälter mit einem ersten Flansch gezeigt, der abgedichtet mit einer ersten Tür verschlossen werden kann. Die Tür ist mit einem Gelenk an dem Flansch befestigt. Hierbei handelt es sich also nicht um eine Mehrfachklappeneinrichtung mit klappeninterner Drehachse, sondern um eine Verschlusseinrichtung, quasi einen Deckel. Dieser Deckel ist angeblich mit seiner Anschlussumgebung zum abgedichteten Überführen zwischen einem solchen Behälter und einem geschlossenen Raum geeignet, wobei der geschlossene Raum einen weiteren Flansch aufweist, der mittels eines Bajonettverschlusssystems an den ersten Flansch angeschlossen werden kann.

Die EP 0 097 514 B1 schlägt ein Verfahren zum Schaffen eines sicheren Durchganges zwischen zwei Schutzumhüllungen vor, von denen zumindest eine tragbar sein kann und die darin befindlichen Personen oder Gegenständen eine geschützte Umgebung gewähren. Die Umhüllungen umfassen Hüllstrukturen mit Bahnen mit Öffnungen darin. Zumindest eine der Bahnen sei ausreichend flexibel, damit ihre eine Öffnung der Öffnung in einer anderen Bahn entspricht, wobei diese Öffnungen derart dimensioniert und angeordnet sind, dass sie sich im Wesentlichen gemeinsam erstrecken, wenn sich die Bahnen gegenüberliegen, und die Öffnungen zwischen den Umhüllungen einen Verbindungsdurchgang schaffen. Das Verfahren nach diesem Stand der Technik umfasst das Schließen einer jeden Öffnung mittels einer Anzahl von Verschlusseinrichtungen, wobei das Schließen gesteuert werde. Die Verschlusseinrichtungen seien an den entsprechenden Bahnen befestigt und dazu ausgelegt, mittels einer Gleiteinrichtung wiederholt geöffnet oder verschlossen zu werden. Die Gleiteinrichtung sei mit den Verschlusseinrichtungen in Eingriff bringbar, um die Verschlusseinrichtungen der einen Bahn und auch die Verschlusseinrichtungen der anderen Bahn untereinander in Eingriff zu bringen. Dadurch würden die Öffnungen in den Bahnen bei getrennten Bahnen geschlossen. Weiterhin sei die Gleiteinrichtung mit allen Verschlusseinrichtungen in Eingriff zu bringen und die Gleiteinrichtung in entgegengesetzte Richtung zu bewegen, um die Gleiteinrichtungen der einen Bahn mit den Gleiteinrichtungen der entsprechend anderen Bahn in Eingriff zu bringen, um die Bahnen zu verbinden und einen Durchgang durch die verbundenen Bahnen zu öffnen.

Aus DE 10 2004 018 812 B4 ist ein Luft- und wasserdichter Reißverschluss bekannt. Ein Flanschabschnitt erstreckt sich um einen Block eines Endteils. Dabei sei ein luft- und wasserdichtes Tragband stärker an dem Flanschabschnitt befestigt. So soll der Reißverschluss auch beim Falten dicht bleiben.

Andockverschlusse zum kontaminationsfreien Verbinden einer ersten flexiblen Umhüllung mit einer zweiten flexiblen Umhüllung sind beispielsweise aus der DE 20 2009 018 082 U1, der DE 10 2013 000 011 A1 und der DE 10 2004 003 511 B4 bekannt. Insbesondere aus der DE 10 2004 003 511 B4 ist ein Andockverschluss zum kontaminationsfreien Verbinden einer ersten flexiblen Umhüllung mit einer zweiten flexiblen Umhüllung bekannt, der folgende Merkmale umfasst:
- eine erste Verschlussvorrichtung, welche mit der ersten Umhüllung verbunden ist, und
- eine zweite Verschlussvorrichtung, welche mit der zweiten Umhüllung verbunden ist, wobei
- die erste Verschlussvorrichtung einen ersten Dockingport und einen ersten Schieber aufweist, und die zweite Verschlussvorrichtung einen zweiten Dockingport und einen zweiten Schieber aufweist,
- der erste Schieber und der zweite Schieber zwischen einer Andockstellung und einer Durchflussstellung verschiebbar sind, wobei in der Andockstellung die erste Umhüllung innerhalb der ersten Verschlussvorrichtung von dieser und die zweite Umhüllung innerhalb der zweiten Verschlussvorrichtung von dieser verschlossen sind,
- in der Andockstellung der erste Schieber am ersten Dockingport und der zweite Schieber am zweiten Dockingport anliegen,
- der erste Dockingport und der zweite Dockingport lösbar miteinander verbindbar sind, und
- wenn der erste Dockingport und der zweite Dockingport miteinander verbunden sind, der erste Schieber und der zweite Schieber beim Verschieben in Richtung der Durchflussstellung die erste Umhüllung und die zweite Umhüllung öffnen und einen von der ersten Verschlussvorrichtung und der zweiten Verschlussvorrichtung umschlossenen Durchflusskanal zum kontaminationsfreien Transport von Substanzen zwischen der ersten Umhüllung und der zweiten Umhüllung bereitstellen.

Ein sicher und einfach handhabbarer Andockverschluss oder ein entsprechendes Andockverfahren zum kontaminationsfreien Verbinden einer ersten flexiblen Umhüllung mit einer zweiten flexiblen Umhüllung ist aus dem Stand der Technik nicht bekannt. Aufgabe einer Ausführungsform der vorliegenden Erfindung ist es, einen sicher handhabbaren Andockverschluss und ein entsprechendes Andockverfahren bereitzustellen, mit denen zwei flexibel Umhüllungen kontaminationsfrei miteinander verbunden werden können und ein Durchgangskanal zum kontaminationsfreien Transport von Substanzen zwischen der ersten Umhüllung und der zweiten Umhüllung bereitgestellt werden kann, wobei die beiden flexiblen Umhüllungen wiederverschließbar sein sollen.

Des Weiteren liegt einer Ausführung der vorliegenden Erfindung die Aufgabe zugrunde, zwei flexible Umhüllungen bereitzustellen, welche kontaminationsfrei miteinander verbindbar und wiederverschließbar sind. Zudem liegt einer Ausbildung der vorliegenden Erfindung die Aufgabe zugrunde, eine Verwendung zum sicheren Handhaben von toxisch wirkenden, staubförmigen Feststoffen, insbesondere bei der Teilentnahme aus flexiblen Umhüllungen wie Originärverpackungen zum Zwecke der Beprobung und/oder Verwiegung vorzuschlagen.

Diese Aufgabe wird mit den in den Ansprüchen 1, 11, 13 und 14 angegebenen Merkmalen gelöst. Vorteilhafte Ausführungsformen sind Gegenstand der Unteransprüche.

Eine Ausführungsform der Erfindung betrifft einen Andockverschluss zum kontaminationsfreien Verbinden einer ersten flexiblen Umhüllung mit einer zweiten flexiblen Umhüllung, umfassend eine erste Verschlussvorrichtung, welche mit der ersten Umhüllung verbindbar oder verbunden ist, und eine zweite Verschlussvorrichtung, welche mit der zweiten Umhüllung verbindbar oder verbunden ist, wobei die erste Verschlussvorrichtung einen ersten Dockingport, einen ersten Endport und einen ersten Schieber aufweist, und die zweite Verschlussvorrichtung einen zweiten Dockingport, einen zweiten Endport und einen zweiten Schieber aufweist, der erste Schieber und der zweite Schieber zwischen einer Andockstellung und einer Durchflussstellung verschiebbar sind, wobei in der Andockstellung die erste Umhüllung innerhalb der ersten Verschlussvorrichtung von dieser und die zweite Umhüllung innerhalb der zweiten Verschlussvorrichtung von dieser verschlossen sind, in der Andockstellung der erste Schieber am ersten Dockingport und der zweite Schieber am zweiten Dockingport anliegen, der erste Dockingport und der zweite Dockingport lösbar miteinander verbindbar sind, und wenn der erste Dockingport und der zweite Dockingport miteinander verbunden sind, der erste Schieber und der zweite Schieber beim Verschieben in Richtung der Durchflussstellung, in welcher der erste Schieber am ersten Endport und der zweite Schieber am zweiten Endport anliegen, die erste Umhüllung und die zweite Umhüllung öffnen und einen von der ersten Verschlussvorrichtung und der zweiten Verschlussvorrichtung umschlossenen Durchflusskanal zum kontaminationsfreien Transport von Substanzen zwischen der ersten Umhüllung und der zweiten Umhüllung bereitstellen.

Unter flexiblen Umhüllungen sind in erster Linie Gebinde, aber auch flexible Rohrstutzen und dergleichen zu verstehen. Der erfindungsgemäße Andockverschluss ermöglicht sowohl das kontaminationsfreie Verbinden von zwei flexiblen Umhüllungen als auch das Wiederverschließen, so dass sie kontaminationsfrei wieder voneinander getrennt werden können. Insofern handelt es sich um eine lösbare Verbindung zwischen den beiden Umhüllungen. Das Transportieren von Substanzen, insbesondere von hochwertigen pharmazeutischen Erzeugnissen und/oder toxisch wirkenden Stoffen, zwischen den beiden flexiblen Umhüllungen kann mittels des vorschlagsgemäßen Andockverschlusses schnell und sicher erfolgen, ohne dass die Gefahr einer Kontamination entsteht. Sowohl die Substanz selbst als auch sich in der Umgebung der beiden Umhüllungen aufhaltende Personen werden geschützt.

Der erste und der zweite Schieber, auch als Absperrorgane bezeichnet, arbeiten nach dem Schiebeverschlussprinzip. Die beiden Umhüllungen sind mit den jeweiligen Dockingports und Endports verbunden und insbesondere mit diesen verklemmt. In der Andockstellung sind die Umhüllungen mit den Verschlussvorrichtungen verschlossen, wobei die Schieber am Dockingport anliegen. Durch Verschieben in die Durchflussstellung, in welcher die Schieber am Endport anliegen, werden die Umhüllungen geöffnet, so dass ein von den Verschlussvorrichtungen umschlossener Durchflusskanal bereitgestellt wird, durch welchen eine Substanz zwischen der ersten und der zweiten Umhüllung kontaminationsfrei transportiert werden kann. Das Andocken und Verschieben des Schiebers von der Andockstellung in die Durchflussstellung ist sehr einfach und schnell ausgeführt, genauso wie Trennen der beiden Umhüllungen voneinander, wozu die Schieber von der Durchflussstellung in die Andockstellung verschoben und die Dockingports voneinander getrennt werden. Die erste und die zweite Verschlussvorrichtung können jeweils einen Reißverschluss oder einen Zippverschluss aufweisen.

Erfindungsgemäß sind der erste Endport und der zweite Endport lösbar miteinander verbindbar. Die beiden Endports haben wie die Dockingports die Aufgabe, die flexiblen Umhüllungen einzuspannen und ihnen eine definierte Form zu geben. Hierzu können die flexiblen Umhüllungen in die Dockingports und die Endports eingeklemmt werden, wobei die Dockingports und die Endports einteilig oder zweiteilig ausgeführt sein können. Weiterhin dienen die Dockingports und die Endports als Anschlag für die beiden Schieber, wodurch die Andockstellung und die Durchflussstellung eindeutig festgelegt werden können. Je nach Ausgestaltung der Verschlussvorrichtungen ist es nicht notwendig, dass auch die Endports miteinander verbunden werden müssen. Dennoch bietet es sich an, auch die Endports so auszugestalten, dass sie miteinander verbindbar sind, wodurch die Stellung der beiden Umhüllungen zueinander genauer definiert und im Betrieb des Andockverschlusses nicht verändert wird. Beschädigungen der Umhüllungen beim Verschieben der Schieber insbesondere in die Durchflussstellung werden hierdurch vermieden.

In einer weitergebildeten Ausführungsform können der erste Schieber und der zweite Schieber lösbar miteinander verbindbar sein. Werden die beiden Schieber miteinander verbunden, so genügt die Betätigung eines Schiebers, um beide Schieber zwischen der Andockstellung und der Durchflussstellung hin- und her zu verschieben. Der Andockverschluss kann von einer Seite her bedient werden, so dass eine beidseitige Zugänglichkeit für den Bediener nicht notwendig ist. Die Handhabung des Andockverschlusses wird hierdurch vereinfacht. Darüber hinaus kann hierdurch gewährleistet werden, dass beide Umhüllungen gleichzeitig und auf gleiche Weise geöffnet und geschlossen werden. Fehlbedienungen, die daraus resultieren könnten, dass sich ein Schieber in der Andockstellung und der andere Schieber in der Durchflussstellung befinden, werden hierdurch vermieden.

Bei einer weitergebildeten Ausführungsform können der erste Schieber und/oder der zweite Schieber jeweils einen Betätigungsabschnitt aufweisen. Das Verschieben der Schieber zwischen der Andockstellung und der Durchflussstellung wird hierdurch erleichtert.

Nach einer weiteren Ausführungsform weist der Andockverschluss einen Schiebeverschluss zum Verbinden der ersten Verschlussvorrichtung mit der zweiten Verschlussvorrichtung auf, welcher durch Verschieben des ersten Schiebers und/oder des zweiten Schiebers in die Durchflussstellung verschließbar ist. Insbesondere dann, wenn sowohl der Dockingport als auch der Endport miteinander verbindbar sind und eine insbesondere feste Verbindung zwischen dem Dockingport und dem Endport vorhanden ist, können die erste und die zweite Verschlussvorrichtung so miteinander verbunden werden, dass sie sich im Betrieb des Andockverschlusses nicht voneinander lösen können. Ein Lösen muss in jedem Fall verhindert werden, da sonst der kontaminationsfreie Transport der Substanzen zwischen der ersten und der zweiten Umhüllung nicht mehr gewährleistet ist. Insbesondere dann, wenn der Endport nur als Anschlag dient, ohne dass eine feste Verbindung zwischen dem Dockingport und dem Endport vorhanden ist, sorgt der Schiebeverschluss dafür, dass die erste Verschlussvorrichtung und die zweite Verschlussvorrichtung auch zwischen den jeweiligen Dockingports und Endports miteinander verbunden werden, so dass sich die beiden Verschlussvorrichtungen und folglich die beiden Umhüllungen in der Durchflussstellung nicht voneinander lösen können. Der kontaminationsfreie Transport der Substanzen zwischen der ersten und der zweiten Umhüllung ist somit sichergestellt. Hierzu kann der Schiebeverschluss als ein die beiden Verschlussvorrichtungen verbindenden Reißverschluss oder Zippverschluss ausgestaltet sein.

Eine weitere Ausführungsform zeichnet sich dadurch aus, dass der Schiebeverschluss Dichtmittel umfasst, welche in dichtendem Kontakt miteinander gebracht werden, wenn der erste Schieber und/oder der zweite Schieber in die Durchflussstellung verschoben werden. Die Dichtmittel erhöhen die Prozesssicherheit, da neben dem Schiebeverschluss als solcher die Dichtmittel den kontaminationsfreien Transport der Substanzen zwischen der ersten und der zweiten Umhüllung sicherstellen.

Bei einer weiteren Ausführungsform kann zumindest einer der Dockingports ein Dockingport-Aufhängelement aufweisen. Mit dem Dockingport-Aufhängelement lassen sich der Transport und die Aufbewahrung der Andockverschlüsse vereinfachen, da diese an einem Haken aufgehängt werden können. Zudem kann ein Benutzer den Andockverschluss bequem mit dem Dockingport-Aufhängelement ergreifen.

Eine weitergebildete Ausführungsform zeichnet sich dadurch aus, dass zumindest einer der Endports ein Endport-Aufhängelement aufweist. Auch hierdurch werden der Transport und die Aufbewahrung der Andockverschlüsse vereinfacht. Zudem kann ein Benutzer den Andockverschluss bequem mit dem Endport-Aufhängelement ergreifen.

Nach Maßgabe einer weiteren Ausführungsform umschließt das Dockingport-Aufhängelement und das Endport-Aufhängelement jeweils eine Öffnung, deren Ebene im Wesentlichen parallel zu einer Hauptdurchgangsrichtung der Substanz zwischen der ersten Umhüllung und der zweiten Umhüllung verläuft. Wenn die beiden Umhüllungen voneinander getrennt sind, können diese auf folgende Weise versiegelt werden: Die betreffende Umhüllung wird um die mit ihr verbundene Verschlussvorrichtung gewickelt und die Verschlussvorrichtung so gebogen, dass die beiden Aufhängelemente beispielsweise mittels eines Kabelbinders miteinander verbindbar sind. Insbesondere bei entleerten Umhüllungen kann auf diese Weise sicher verhindert werden, dass Reste der Substanzen aus der betreffenden Umhüllung austreten können, insbesondere dann, wenn diese toxisch sind.

Eine weitere Ausführungsform zeichnet sich dadurch aus, dass das Dockingport-Aufhängelement und das Endport-Aufhängelement ineinander einbringbar sind. Hierzu kann beispielsweise eine der Aufhängelemente eine Ausnehmung aufweisen, in welche das andere Aufhängelement einbringbar ist. Die Stellungen der beiden Aufhängelemente zueinander beim Versiegeln der betreffenden Umhüllung sind hierdurch eindeutig definiert.

Eine weitere Ausführungsform ist dadurch gekennzeichnet, dass zumindest der erste Dockingport und der zweite Dockingport miteinander korrespondierende Positionierungsabschnitte zum Positionieren der Dockingports relativ zueinander aufweisen. Die Positionierungsabschnitte, welche Aufnahmekonturen umfassen können, legen die Positionen der Dockingports zueinander fest, was das Verbinden der Dockingports erleichtert. Auch die Endports können über derartige Positionierungsabschnitte aufweisen, wenn sie miteinander verbindbar sind. Eine ausreichend genaue Positionierung der beiden Verschlussvorrichtungen zueinander ist eine wichtige Voraussetzung für eine kontaminationsfreie Verbindung zwischen den beiden Umhüllungen. Die Positionierungsabschnitte gewährleisten ausreichend genaue Positionierung.

In einer weiteren Ausführungsform können zumindest der erste Dockingport und der zweite Dockingport Formschlussmittel und/oder Reibschlussmittel zum lösbaren Verbinden der Dockingports miteinander aufweisen. Für den Fall, dass die Endports miteinander verbindbar sind, können auch die Endports derartige Formschlussmittel und/oder Reibschlussmittel aufweisen. Als Formschlussmittel können beispielsweise Clipsverbindungen verwendet werden. Als Reibschlussmittel können konusförmige Vorsprünge verwendet werden, welche in korrespondierende Ausnehmungen eingeschoben werden. Die Formschlussmittel und die Reibschlussmittel sind einfach herzustellen und zu bedienen.

Eine Ausgestaltung der Erfindung betrifft ein Verfahren zum kontaminationsfreien Verbinden einer ersten flexiblen Umhüllung mit einer zweiten flexiblen Umhüllung mit einem Andockverschluss nach einem der vorherigen Andockverschlüsse, umfassend folgende Schritte:
- Bereitstellen einer ersten Verschlussvorrichtung mit einem ersten Dockingport, einem ersten Endport und einem ersten Schieber,
- Bereitstellen einer zweiten Verschlussvorrichtung mit einem zweiten Dockingport, einem zweiten Endport und einem zweiten Schieber,
- wobei sich die erste Verschlussvorrichtung und die zweite Verschlussvorrichtung in einer Andockstellung befinden, in welcher die erste Umhüllung innerhalb der ersten Verschlussvorrichtung von dieser und die zweite Umhüllung innerhalb der zweiten Verschlussvorrichtung von dieser verschlossen sind und in welcher der erste Schieber am ersten Dockingport und der zweite Schieber am zweiten Dockingport anliegen,
- Verbinden des ersten Dockingports mit dem zweiten Dockingport, und
- Verschieben des ersten Schiebers und des zweiten Schiebers in Richtung einer Durchflussstellung, in welcher der erste Schieber am ersten Endport und der zweite Schieber am zweiten Endport anliegen, wodurch die erste Umhüllung und die zweite Umhüllung geöffnet werden und ein von der ersten Verschlussvorrichtung und der zweiten Verschlussvorrichtung umschlossener Durchflusskanal zum kontaminationsfreien Transport von Substanzen zwischen der ersten Umhüllung und der zweiten Umhüllung bereitgestellt wird.

Die technischen Effekte und Vorteile, die sich mit dem vorschlagsgemäßen Andockverfahren erreichen lassen, entsprechen denjenigen, die für den vorliegenden Andockverschluss erörtert worden sind. Zusammenfassend sei darauf hingewiesen, dass das Transportieren von Substanzen, insbesondere von hochwertigen pharmazeutischen Erzeugnissen und/oder toxisch wirkenden Stoffen, zwischen den beiden flexiblen Umhüllungen mittels des vorschlagsgemäßen Andockverfahrens schnell und sicher erfolgen kann, ohne dass die Gefahr einer Kontamination entsteht. Sowohl die Substanz selbst als auch sich in der Umgebung der beiden Umhüllungen aufhaltende Personen werden geschützt. Erfindungsgemäß umfasst das Verfahren den Schritt des Verbindens des ersten Endports mit dem zweiten Endport. Die Stellung der beiden Umhüllungen zueinander wird genauer definiert und im Betrieb des Andockverschlusses nicht verändert. Beschädigungen der Umhüllungen beim Verschieben der Schieber insbesondere in die Durchflussstellung werden hierdurch vermieden. Darüber hinaus kann das Verfahren in einer weitergebildeten Ausgestaltung den Schritt des Verbindens des ersten Schiebers mit dem zweiten Schieber umfassen. Werden die beiden Schieber miteinander verbunden, so genügt die Betätigung eines Schiebers, um beide Schieber zwischen der Andockstellung und der Durchflussstellung hin- und her zu verschieben. Der Andockverschluss kann von einer Seite her bedient werden, so dass eine beidseitige Zugänglichkeit für den Bediener nicht notwendig ist. Die Handhabung des Andockverschlusses wird hierdurch vereinfacht. Darüber hinaus kann hierdurch gewährleistet werden, dass beide Umhüllungen gleichzeitig und auf gleiche Weise geöffnet und geschlossen werden. Fehlbedienungen, die daraus resultieren könnten, dass sich ein Schieber in der Andockstellung und der andere Schieber in der Durchflussstellung befinden, werden hierdurch vermieden.

Eine Ausführung der Erfindung betrifft eine erste flexible Umhüllung, insbesondere Packmittel für staubförmige, toxisch wirkende Feststoffe, wie Roh-, Hilfs- und Fertigstoffe in der chemischen und pharmazeutischen Industrie, wobei die flexible Umhüllung mit einer ersten Verschlussvorrichtung eines Andockverschlusses nach einem der vorherigen Ausführungsformen verbunden und mittels dieser verschließbar ist, wobei mittels des Andockverschlusses eine zweite flexible Umhüllung mittels eines Andockverfahrens nach einem der zuvor erörterten Ausgestaltungen kontaminationsfrei an die erste flexible Umhüllung andockbar und simultan gemeinsam öffenbar und wieder abdockbar und simultan wiederverschließbar ist.

Eine Ausbildung der Erfindung betrifft die Verwendung eines Andockverschlusses nach einem der vorherigen Ausführungsformen zum sicheren Handhaben von Substanzen, insbesondere von toxisch wirkenden, staubförmigen Feststoffen, beispielsweise bei der Teilentnahme aus flexiblen Umhüllungen wie Originärverpackungen zum Zwecke der Beprobung und/oder Verwiegung.

Die technischen Effekte und Vorteile, die sich mit der vorschlagsgemäßen Umhüllung und der vorschlagsgemäßen Verwendung des Andockverschlusses erreichen lassen, entsprechen denjenigen, die für den vorliegenden Andockverschluss erörtert worden sind. Zusammenfassend sei darauf hingewiesen, dass das Transportieren von Substanzen, insbesondere von hochwertigen pharmazeutischen Erzeugnissen und/oder toxisch wirkenden Stoffen, zwischen den beiden flexiblen Umhüllungen schnell und sicher erfolgen kann, ohne dass die Gefahr einer Kontamination entsteht. Sowohl die Substanz selbst als auch sich in der Umgebung der beiden Umhüllungen aufhaltende Personen werden geschützt.

Beispielhafte Ausführungsformen der Erfindung werden im Folgenden unter Bezugnahme auf die beigefügten Zeichnungen näher erläutert. Es zeigen
- Figuren 1A bis 1C: prinzipielle Darstellungen zum Veranschaulichen eines erfindungsgemäßen Andockverfahrens,
- Figuren 2A bis 2C: verschiedene Ansichten einer ersten Ausführungsform eines erfindungsgemäßen Andockverschlusses, bei welchem sich die Schieber in einer Andockstellung befinden,
- Figuren 3A1 bis 3D2: verschiedene Ansichten der in den Figuren 2A bis 2C dargestellten ersten Ausführungsform des Andockverschlusses in verschiedenen Stellungen,
- Figuren 4A1 bis 4C2: verschiedene Ansichten einer zweiten Ausführungsform des Andockverschlusses in verschiedenen Stellungen,
- Figur 5: eine vergrößerte Darstellung des ersten Dockingport-Aufhängelements und des ersten Endport-Aufhängelements,
- Figuren 6A bis 6C: verschiedene Anordnungen der ersten Umhüllung,
- Figuren 7A und 7B: verschiedene Ansichten einer dritten Ausführungsform des Andockverschlusses, und
- Figuren 8A und 8B: verschiedene Ansichten einer vierten Ausführungsform des Andockverschlusses.

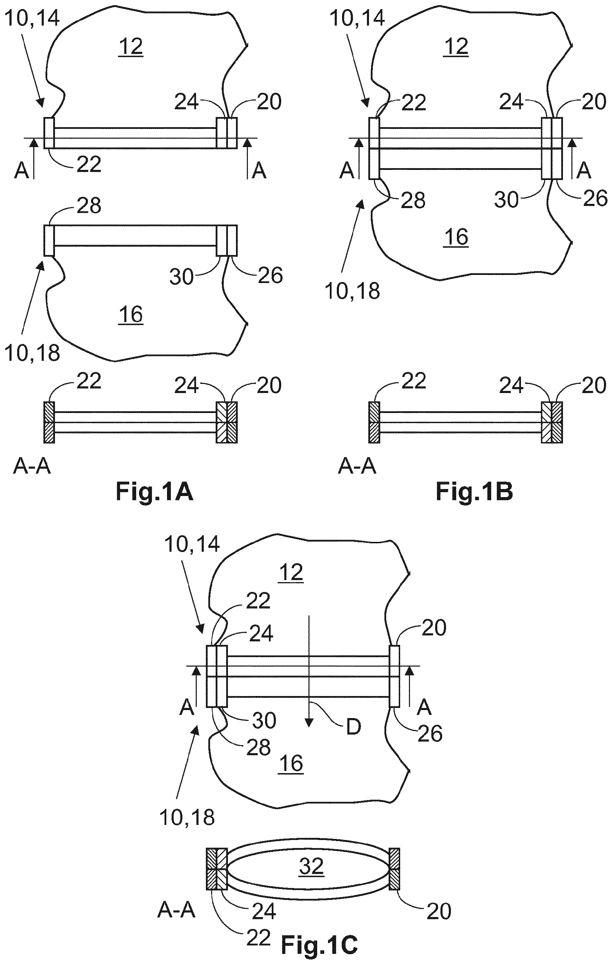

Die prinzipiellen Figuren 1A bis 1C dienen zum Veranschaulichen des erfindungsgemäßen Andockverfahrens unter Verwendung eines erfindungsgemäßen Andockverschlusses 10. In Figur 1A ist eine erste flexible Umhüllung 12 mit einer ersten Verschlussvorrichtung 14 des Andockverschlusses 10 verbunden und von dieser verschlossen. Des Weiteren ist eine zweite flexible Umhüllung 16 mit einer zweiten Verschlussvorrichtung 18 des Andockverschlusses 10 verbunden und von dieser verschlossen. Sowohl bei der ersten Umhüllung 12 als auch bei der zweiten Umhüllung 16 handelt es sich um flexible Gebinde, die als Originärverpackungen ausgeführt sein können. In einer der Umhüllungen 12, 16, im dargestellten Beispiel in der ersten Umhüllung 12, ist eine nicht dargestellte Substanz, beispielsweise ein pharmazeutischer und/oder toxischer Feststoff, gelagert. Eine oder beide Umhüllungen 12, 16 können aber auch flexible Rohrstutzen oder dergleichen sein.

Die erste Verschlussvorrichtung 14 umfasst einen ersten Dockingport 20, einen ersten Endport 22 und einen ersten Schieber 24, der zwischen dem ersten Dockingport 20 und dem ersten Endport 22 hin- und her verschiebbar ist. Entsprechend umfasst die zweite Verschlussvorrichtung 18 einen zweiten Dockingport 26, einen zweiten Endport 28 und einen zweiten Schieber 30. Auch der zweite Schieber 30 ist zwischen dem zweiten Dockingport 26 und dem zweiten Endport 28 hin- und hier verschiebbar. Wie aus der Schnittdarstellung entlang der Schnittebene A-A hervorgeht, sind der erste Dockingport 20, der erste Schieber 24 und der erste Endport 22 zweiteilig aufgebaut. Die erste Umhüllung 12 ist dazwischen den beiden Teilen des ersten Dockingports 20, des ersten Schiebers 24 und des ersten Dockingports 20 angeordnet. Eine einteilige Ausgestaltung ist aber ebenfalls denkbar. Der zweite Dockingport 26, der zweite Schieber 30 und der zweite Endport 28 können genauso aufgebaut sein.

In Figur 1A befinden sich der erste Schieber 24 und der zweite Schieber 30 in einer Andockstellung, in welcher der erste Schieber 24 am ersten Dockingport 20 und der zweite Schieber 30 am zweiten Dockingport 26 anliegen. In der Andockstellung ist die erste Umhüllung 12 innerhalb der ersten Verschlussvorrichtung 14 von dieser verschlossen. Selbiges gilt für die zweite Umhüllung 16. Folglich kann eine Substanz, die beispielsweise in der ersten Umhüllung 12 gelagert ist, die erste Umhüllung 12 nicht durch die erste Verschlussvorrichtung 14 verlassen. Selbiges gilt auch für die zweite Umhüllung 16, wobei jedoch, wie bereits erwähnt, im dargestellten Beispiel nur in der ersten Umhüllung 12 eine Substanz gelagert ist.

Wie aus Figur 1A hervorgeht, sind die erste Umhüllung 12 und die zweite Umhüllung 16 beabstandet voneinander angeordnet. In Figur 1B liegen der erste Dockingport 20 und der zweite Dockingport 26, der erste Schieber 24 und der zweite Schieber 30 sowie der erste Endport 22 und der zweite Endport 28 aneinander an. Der erste Schieber 24 und der zweite Schieber 30 befinden sich aber nach wie vor in der Andockstellung, so dass die erste Umhüllung 12 und die zweite Umhüllung 16 weiterhin verschlossen sind. In Figur 1C sind der erste Schieber 24 und der zweite Schieber 30 in eine Durchflussstellung verschoben worden, in welcher der erste Schieber 24 am ersten Endport 22 und der zweite Schieber 24 am zweiten Endport 28 anliegen. Infolge des Verschiebens der Schieber 24, 30 in die Durchflussstellung werden die erste Umhüllung 12 und die zweite Umhüllung 16 geöffnet, so dass ein Durchflusskanal 32 bereitgestellt wird, durch welchen die Substanz kontaminationsfrei von der ersten Umhüllung 12 in die zweite Umhüllung 16 überführt werden kann. Der Pfeil in Figur 1C kennzeichnet die Hauptdurchgangsrichtung D der Substanz durch die erste und die zweite Verschlussvorrichtung 14, 18 beim Überführen von der ersten Umhüllung 12 in die zweite Umhüllung 16.

Um die beiden Umhüllungen 12, 18 wieder zu verschließen und kontaminationsfrei voneinander zu trennen, werden die beschriebenen Schritte in der umgekehrten Reihenfolge und entgegengesetzt durchgeführt.

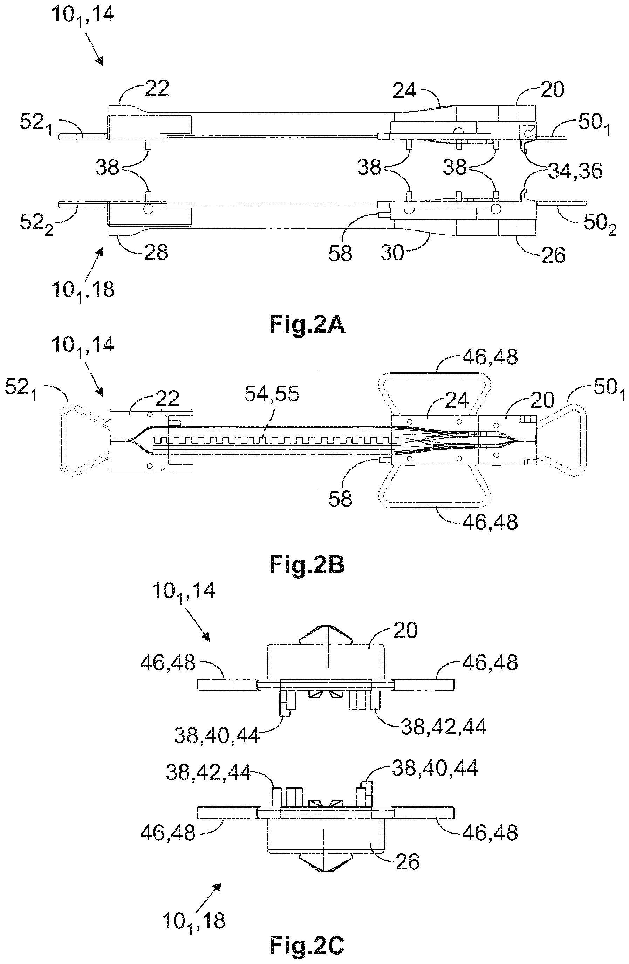

In der Figur 2A ist eine erste Ausführungsform des erfindungsgemäßen Andockverschlusses 10₁ anhand einer Seitenansicht, in der Figur 2B anhand einer Draufsicht und in Figur 2C anhand einer Vorderansicht gezeigt, jeweils ohne die Umhüllungen 12, 16. Der erste Dockingport 20 und der zweite Dockingport 26 weisen Formschlussmittel 34 auf, mit welchen diese lösbar miteinander verbindbar sind. Die Formschlussmittel 34 sind als ineinander eingreifende Haken 36 ausgebildet. Weiterhin weisen der erste Dockingport 20 und der zweite Dockingport 26 Positionierungsabschnitte 38 auf, mit denen die Position der beiden Dockingports 20, 26 relativ zueinander festgelegt werden kann. Auch der erste Schieber 24 und der zweite Schieber 30 sowie der erste Endport 22 und der zweite Endport 28 weisen derartige Positionierungsabschnitte 38 auf. Wie insbesondere aus der Figur 2C hervorgeht, weisen einige der Positionierungsabschnitte 38 Hülsen 40 auf, in welche korrespondierende Vorsprünge 42 mit einem bestimmten Übermaß einbringbar sind, so dass diese Positionierungsabschnitte 38 als Reibschlussmittel 44 ausgebildet sind, mit denen die Dockingports 20, 26, die Schieber 24, 30 und/oder die Endports 22, 28 lösbar miteinander verbindbar sind.

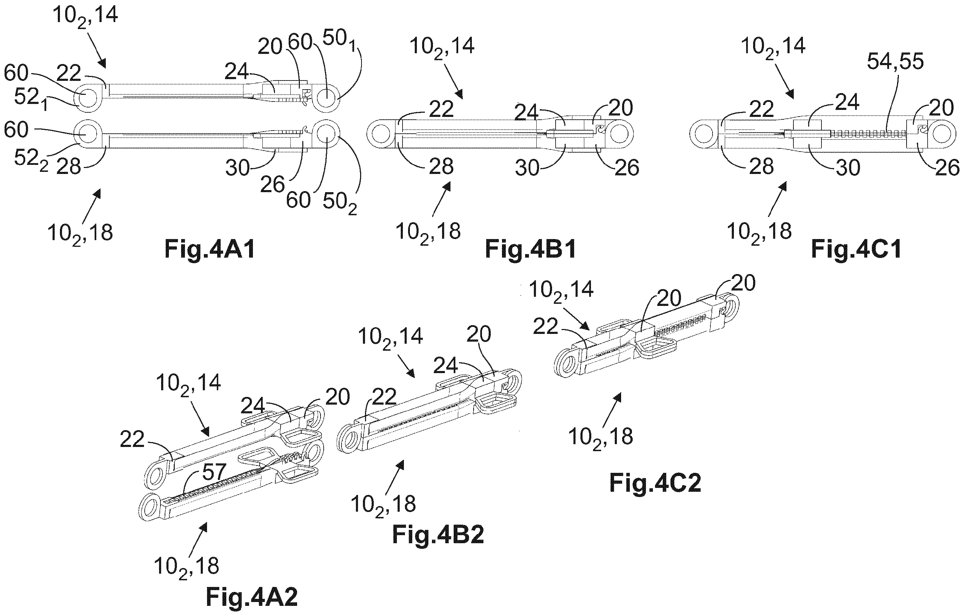

Wie aus der Figur 2B ersichtlich, weisen die erste Verschlussvorrichtung 14 und die diesbezüglich identisch aufgebaute zweite Verschlussvorrichtung 18 jeweils einen ersten Reißverschluss 55 bzw. weinen zweiten Reißverschluss 57 (siehe Figur 4A2) auf, mit denen die erste Umhüllung 12 bzw. die zweite Umhüllung 16 verschlossen sind. Ein Zippverschluss anstelle des Reißverschlusses ist ebenfalls denkbar.

Sowohl der erste Schieber 24 als auch der zweite Schieber 30 weisen jeweils einen Betätigungsabschnitt 46 auf, der jeweils zwei seitlich nach außen stehende Griffstücke 48 umfasst, wie insbesondere aus der Figur 2C erkennbar ist.

Darüber hinaus weist der erste Dockingport 20 ein erstes Dockingport-Aufhängelement 50₁ und der zweite Dockingport 26 ein zweites Dockingport-Aufhängelement 50₂ auf. Der erste Endport 22 weist ein erstes Endport-Aufhängelement 52₁ und der zweite Endport 28 ein zweites Endport-Aufhängelement 52₂ auf. Sowohl mit den Dockingport-Aufhängelementen 50₁, 50₂ als auch mit den Endport-Aufhängelementen 52₁, 52₂ kann der Andockverschluss 10₁ ergriffen und an einer Aufhängvorrichtung eingehängt werden.

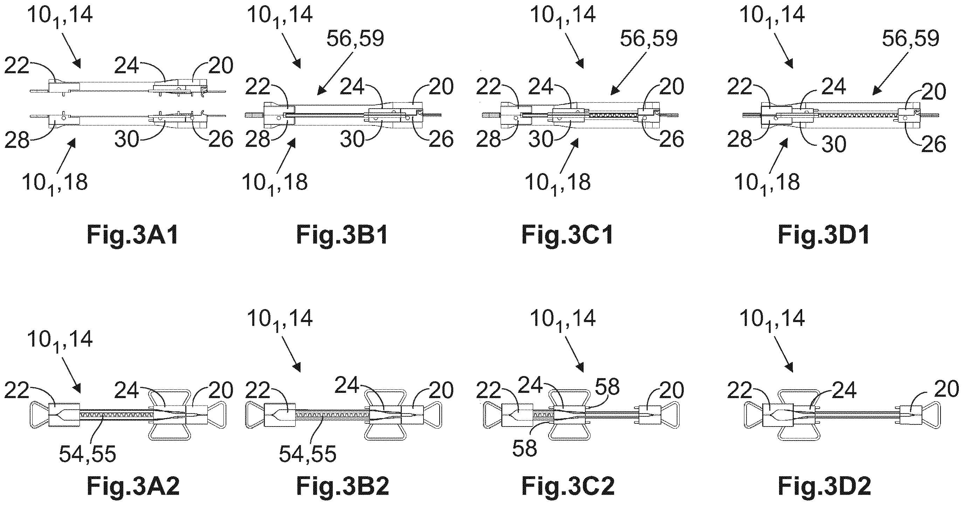

In den Figuren 3A1 bis 3D2 ist die in den Figuren 2A bis 2C dargestellte Ausführungsform des Andockverschlusses 10₁ in verschiedenen Stellungen einmal anhand einer Seitenansicht und einmal anhand einer Draufsicht gezeigt. Die Figuren, welche die gleichen Stellungen zeigen, sind mit gleichen Buchstaben bezeichnet.

In den Figuren 3A1 und 3A2 sind die beiden Verschlussvorrichtungen 14, 18 beabstandet voneinander angeordnet. In den Figuren 3B1 und 3B2 liegen die beiden Verschlussvorrichtungen 14, 18 aneinander an und sind mit den Formschlussmitteln 34 und den Reibschlussmitteln 44 an den Dockingports 20, 26, an den Schiebern 24, 30 und an den Endports 22, 28 lösbar miteinander verbunden (siehe Figuren 2A bis 2C). In den Figuren 3A1 bis 3B2 liegen die Schieber 24, 30 an den Dockingports 20, 26 an, so dass, wie für die Figuren 1A bis 1C beschrieben, die hier nicht dargestellten Umhüllungen 12, 16 verschlossen sind, was insbesondere aus den Figuren 3A2 und 3B2 hervorgeht, wo Zähne 54 des ersten Reißverschlusses 55 der ersten Verschlussvorrichtung 14 ineinander eingreifen. Wie erwähnt, befinden sich die Schieber 24, 30 in der Andockstellung.

In den Figuren 3C1 und 3C2 ist zu erkennen, dass die Schieber 24, 30 aus der Andockstellung in Richtung der Durchflussstellung verschoben sind. Da sie mittels der Formschlussmittel 34 und/oder der Reibschlussmittel 44 miteinander verbunden sind, können die Schieber 24, 30 nur miteinander und simultan bewegt werden. Aus der Figur 3C1 ist gut erkennbar, dass der Andockverschluss 10₁ einen Schiebeverschluss 56 zum Verbinden der ersten Verschlussvorrichtung 14 mit der zweiten Verschlussvorrichtung 18 aufweist, welcher durch Verschieben des ersten Schiebers 24 und/oder des zweiten Schiebers 30 in die Durchflussstellung verschließbar ist. In Figur 3C1 ist der Schiebeverschluss 56 zwischen den Schiebern 24, 30 und den Dockingports 20, 26 geschlossen, während er zwischen den Schiebern 24, 30 und den Endports 22, 28 noch geöffnet ist. Aus der Figur 3C2 ist zu erkennen, dass die Verschlussvorrichtungen 14, 18 zwischen den Schiebern 24, 30 und den Dockingports 20, 26 geöffnet und zwischen den Schiebern 24, 30 und den Endports 22, 28 noch geschlossen sind.

Aus der Figur 3C2 ist ebenfalls gut erkennbar, dass die Schieber 24, 30 insgesamt vier Zentrierungsvorsprünge 58 aufweisen, welche je nachdem, ob sich die Schieber 24, 30 in der Andockstellung oder der Durchflussstellung in nicht gezeigte Ausnehmungen entweder des betreffenden Dockingports 20, 26 oder des betreffenden Endports 22, 28 eingreifen, wodurch die Position der Schieber 24, 30 relativ zu den Endports 22, 28 oder zu den Dockingports 20, 26 festgelegt wird.

In den Figuren 3D1 und 3D2 befinden sich die Schieber 24, 30 in der Durchflussstellung, in welcher sie an den Endports 22, 28 anliegen. Aus der Figur 3D1 geht hervor, dass der Schiebeverschluss 56 vollständig geschlossen ist, so dass die erste Verschlussvorrichtung 14 und die zweite Verschlussvorrichtung 18 auch zwischen den Dockingports 20, 26 und den Endports 22, 28 miteinander verbunden sind. Aus der Figur 3D2 geht hervor, dass die beiden Verschlussvorrichtungen 14, 18 geöffnet sind und den Durchflusskanal 32 bereitstellen, durch welchen die Substanz kontaminationsfrei aus der ersten Umhüllung 12 in die zweite Umhüllung 16 und umgekehrt überführt werden kann.

Aus den Figuren 3A1 bis 3D2 ist erkennbar, dass die erste Verschlussvorrichtung 14 den bereits erwähnten ersten Reißverschluss 55 oder Zippverschluss aufweist, mit welcher die erste Umhüllung 12 geöffnet und verschlossen werden kann. Entsprechend weist die zweite Verschlussvorrichtung 18 einen zweiten Reißverschluss 57 oder Zippverschluss auf (siehe Figur 4A2), mit welcher die zweite Umhüllung 16 geöffnet und verschlossen werden kann. Im angedockten Zustand liegen der erste Reißverschluss 55 oder Zippverschluss und der zweite Reißverschluss 57 oder Zippverschluss in parallelen Ebenen zueinander, die senkrecht zur Hauptdurchgangsrichtung D (siehe Figur 1C) verlaufen. Der Schiebeverschluss 56 ist als ein dritter Reißverschluss 59 oder Zippverschluss ausgebildet, kann aber auch einen vierten Reißverschluss oder Zippverschluss umfassen (nicht dargestellt). Der dritte Reißverschluss 59 oder Zippverschluss liegt in einer Ebene, die parallel zur Hauptdurchgangsrichtung D und damit senkrecht zur Ebene verläuft, in welcher der erste und der zweite Reißverschluss 55, 57 oder Zippverschluss verlaufen. Die ersten und die zweiten Reißverschlüsse 55, 57 bilden mit dem dritten Reißverschluss 59 daher einen Winkel von 90°. Alle Reißverschlüsse 55, 57, 59 werden mit den Schiebern 24, 30 gleichzeitig betätigt, wobei der erste Reißverschluss 55 und der zweite Reißverschluss 57 geöffnet werden, wenn der dritte Reißverschluss 59 verschlossen wird und umgekehrt. Die Reißverschlüsse 55, 57, 59 sind insbesondere wasserdicht. Vor allem der dritte Reißverschluss 59 kann durch Formschlussmittel wie eine Schwalbenschwanzverbindung ersetzt werden.

In den Figuren 4A1 bis 4A2 ist eine zweite Ausführungsform des erfindungsgemäßen Andockverschlusses 10₂ analog zu den Darstellungen der Figuren 3A1 bis 3D2 gezeigt, wobei die Durchflussstellung gemäß den Figuren 3D1 und 3D1 aus Darstellungsgründen nicht gezeigt ist.

Der Aufbau und die Funktionsweise der zweiten Ausführungsform unterscheiden sich nicht wesentlich von denjenigen der ersten Ausführungsform. Es wird im Folgenden daher nur auf die Unterschiede eingegangen. Die beiden Dockingport-Aufhängelemente 50₁, 50₂ und die beiden Endport-Aufhängelemente 52₁, 52₂ sind in der zweiten Ausführungsform des erfindungsgemäßen Andockverschlusses 10₂ im Vergleich zur ersten Ausführungsform des erfindungsgemäßen Andockverschlusses 10₁ um 90° gedreht angeordnet und ringförmig ausgebildet. Die beiden Dockingport-Aufhängelemente 50₁, 50₂ und die beiden Endport-Aufhängelemente 52₁, 52₂ umschließen jeweils eine Öffnung 60, deren Ebene im Wesentlichen parallel zu der in der Figur 1C gekennzeichneten Hauptdurchgangsrichtung D.

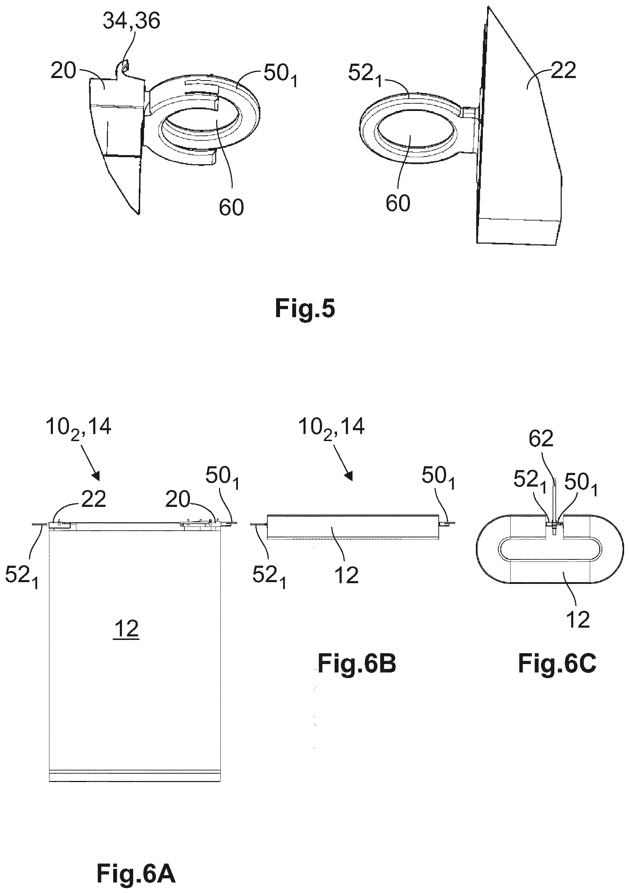

In der Figur 5 sind das erste Dockingport-Aufhängelement 50₁ und das erste Endport-Aufhängelement 52₁ vergrößert gezeigt. Man erkennt, dass das erste Dockingport-Aufhängelement 50₁ so ausgestaltet ist, dass das erste Endport-Aufhängelement 52₁ in dieses einbringbar ist. Das zweite Dockingport-Aufhängelement 50₂ und das zweite Endport-Aufhängelement 52₂ können genauso aufgebaut sein. In den Figuren 6A bis 6C ist der Hintergrund der Einbringbarkeit erläutert. Beispielsweise die entleerte erste Umhüllung 12, die von der zweiten Umhüllung 16 getrennt und folglich verschlossen ist (siehe Figur 6A), wird um die erste Verschlussvorrichtung 14 gewickelt, wie in Figur 6B gezeigt. Anschließend wird die erste Verschlussvorrichtung 14 so gebogen, dass das erste Dockingport-Aufhängelement 50₁ und das erste Endport-Aufhängelement 52₁ ineinander eingebracht werden können. In Figur 6C sind das erste Dockingport-Aufhängelement 50₁ und das erste Endport-Aufhängelement 52₁ ineinander eingebracht und mit einem Kabelbinder 62 miteinander verbunden, so dass sie sich nicht mehr voneinander lösen können. Die erste Umhüllung 12 ist folglich versiegelt und kann sich nicht wieder von der ersten Verschlussvorrichtung 14 abrollen.

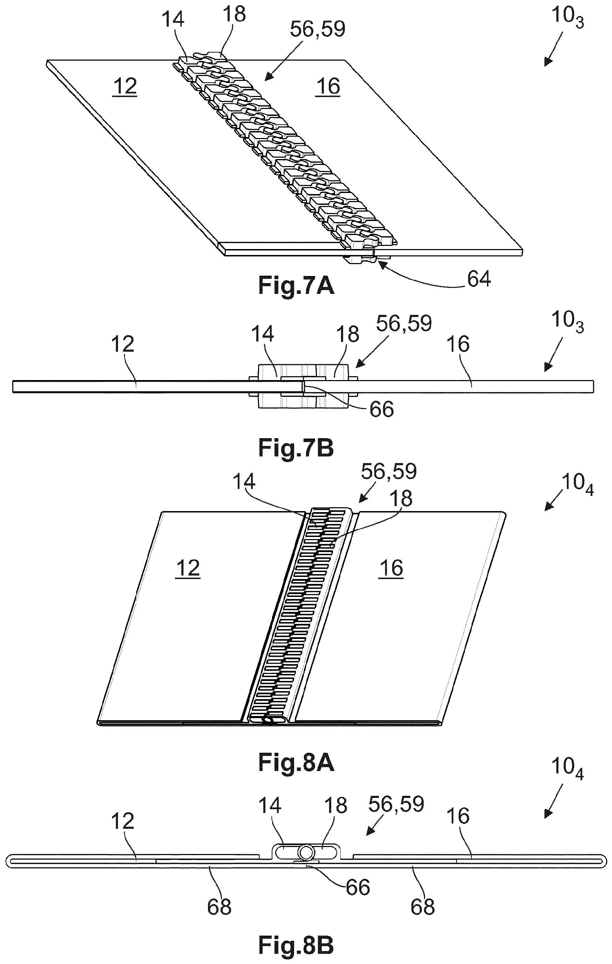

In den Figuren 7A und 7B ist eine dritte Ausführungsform des Andockverschlusses 10₃ anhand einer perspektivischen Teilansicht und anhand einer Vorderansicht gezeigt. Wie aus den Figuren 3A1 bis 3A2 hervorgeht, umfasst der Andockverschluss 10₃ den Schiebeverschluss 56, mit welchem die an der ersten flexiblen Umhüllung 12 angeordnete erste Verschlussvorrichtung 14 mit der zweiten Verschlussvorrichtung 18 der zweiten flexiblen Umhüllung 16 verbindbar ist. Wie erwähnt, wird der Schiebeverschluss 56 vom dritten Reißverschluss 59 gebildet. In der dritten Ausführungsform des Andockverschlusses 10₃ umfasst der dritte Reißverschluss 59 Dichtmittel 64, welche in dichtendem Kontakt miteinander gebracht werden, wenn der erste Schieber 24 und/oder der zweite Schieber 30 in die Durchflussstellung verschoben werden und der Reißverschluss 59 geschlossen wird. In diesem Fall werden die Dichtmittel 64 von der ersten flexiblen Umhüllung 12 und der zweiten flexiblen Umhüllung 16 gebildet, die so ausgeführt und mit dem Reißverschluss 59 verbunden sind, dass diese dann, wenn der Reißverschluss 59 geschlossen ist, so aneinander anstoßen, dass sie jeweils eine Dichtkante 66 bilden. Der Durchflusskanal 32 wird von den Dichtmitteln zusätzlich abgedichtet. Insbesondere aus der Figur 7B ist erkennbar, dass die Dichtkanten 66 von den Zähnen des Reißverschlusses 59 umschlossen wird. Die Dichtkanten 66 verlaufen daher innerhalb des Reißverschlusses 59.

Sinngemäß können auch der erste Reißverschluss 55 und der zweite Reißverschluss 57 so aufgebaut sein, dass auch sie die Dichtmittel aufweisen, die wirksam werden, wenn die Reißverschlüsse 55, 57 verschlossen sind.

In den Figuren 8A und 8B ist eine vierte Ausführungsform des Andockverschlusses 10₄ anhand einer perspektivischen Darstellung bzw. einer Vorderansicht gezeigt. Der grundsätzliche Aufbau des Andockverschlusses 10₄ nach der vierten Ausführungsform entspricht dabei demjenigen des Andockverschlusses 10₃ nach der dritten Ausführungsform. Allerdings verläuft die Dichtkante 66 nicht innerhalb des Reißverschlusses 59, sondern außerhalb. Die Dichtmittel 64 werden von jeweils einer zusätzlichen Schicht 68 gebildet, welche auf die erste flexible Umhüllung 12 und die zweite flexible Umhüllung 16 aufgebracht sind. Ist der dritte Reißverschluss 66 verschlossen, stoßen die beiden Schichten 68 aneinander, so dass die Dichtkante 66 gebildet wird. Die beiden Schichten 68 können beispielsweise als Polyethylen-Überzug (PE-Überzug) ausgeführt sein.

### Bezugszeichenliste

- 10, 10₁ bis 10₄: Andockverschluss
- 12: erste flexible Umhüllung
- 14: erste Verschlussvorrichtung
- 16: zweite flexible Umhüllung
- 18: zweite Verschlussvorrichtung

- 20: erster Dockingport
- 22: erster Endport
- 24: erster Schieber
- 26: zweiter Dockingport
- 28: zweiter Endport

- 30: zweiter Schieber
- 32: Durchflusskanal
- 34: Formschlussmittel
- 36: Haken
- 38: Positionierungsabschnitt

- 40: Hülsen
- 42: Vorsprung
- 44: Reibschlussmittel
- 46: Betätigungsabschnitt
- 48: Griffstück

- 50: Dockingport-Aufhängelement
- 50₁: erstes Dockingport-Aufhängelement
- 50₂: zweites Dockingport-Aufhängelement
- 52: Endport-Aufhängelement
- 52₁: erstes Endport-Aufhängelement
- 52₂: zweites Endport-Aufhängelement
- 54: Zähne
- 55: erster Reißverschluss
- 56: Schiebeverschluss
- 57: zweiter Reißverschluss
- 58: Zentrierungsvorsprung
- 59: dritter Reißverschluss

- 60: Öffnung
- 62: Kabelbinder
- 64: Dichtmittel
- 66: Dichtkante
- 68: Schicht

- D: Hauptdurchgangsrichtung

## Patentansprüche

1. Andockverschluss zum kontaminationsfreien Verbinden einer ersten flexiblen Umhüllung (12) mit einer zweiten flexiblen Umhüllung (16), umfassend
- eine erste Verschlussvorrichtung (14), welche mit der ersten Umhüllung (12) verbindbar oder verbunden ist, und
- eine zweite Verschlussvorrichtung (18), welche mit der zweiten Umhüllung (16) verbindbar oder verbunden ist, wobei
- die erste Verschlussvorrichtung (14) einen ersten Dockingport (20), einen ersten Endport (22) und einen ersten Schieber (24) aufweist, und
- die zweite Verschlussvorrichtung (18) einen zweiten Dockingport (26), einen zweiten Endport (28) und einen zweiten Schieber (30) aufweist,
- der erste Schieber (24) und der zweite Schieber (30) zwischen einer Andockstellung und einer Durchflussstellung verschiebbar sind, wobei in der Andockstellung die erste Umhüllung (12) innerhalb der ersten Verschlussvorrichtung (14) von dieser und die zweite Umhüllung (16) innerhalb der zweiten Verschlussvorrichtung (18) von dieser verschlossen sind,
- in der Andockstellung der erste Schieber (24) am ersten Dockingport (20) und der zweite Schieber (30) am zweiten Dockingport (26) anliegen,
- der erste Dockingport (20) und der zweite Dockingport (26) lösbar miteinander verbindbar sind,
- der erste Endport (22) und der zweite Endport (28) lösbar miteinander verbindbar sind, und
- wenn der erste Dockingport (20) und der zweite Dockingport (26) miteinander verbunden sind, der erste Schieber (24) und der zweite Schieber (30) beim Verschieben in Richtung der Durchflussstellung, in welcher der erste Schieber (24) am ersten Endport (22) und der zweite Schieber (30) am zweiten Endport (28) anliegen, die erste Umhüllung (12) und die zweite Umhüllung (16) öffnen und einen von der ersten Verschlussvorrichtung (14) und der zweiten Verschlussvorrichtung (18) umschlossenen Durchflusskanal (32) zum kontaminationsfreien Transport von Substanzen zwischen der ersten Umhüllung (12) und der zweiten Umhüllung (16) bereitstellen.

2. Andockverschluss nach Anspruch 1,
**dadurch gekennzeichnet, dass** der erste Schieber (24) und der zweite Schieber (30) lösbar miteinander verbindbar sind.

3. Andockverschluss nach einem der vorherigen Ansprüche,
**dadurch gekennzeichnet, dass** der erste Schieber (24) und/oder der zweite Schieber (30) jeweils einen Betätigungsabschnitt (46) aufweisen.

4. Andockverschluss nach einem der vorherigen Ansprüche,
**dadurch gekennzeichnet, dass** der Andockverschluss (10) zumindest einen Schiebeverschluss (56) zum Verbinden der ersten Verschlussvorrichtung (14) mit der zweiten Verschlussvorrichtung (18) aufweist, welcher durch Verschieben des ersten Schiebers (24) und/oder des zweiten Schiebers (30) in die Durchflussstellung verschließbar ist.

5. Andockverschluss nach Anspruch 4,
**dadurch gekennzeichnet, dass** der Schiebeverschluss (56) Dichtmittel (66) umfasst, welche in dichtendem Kontakt miteinander gebracht werden, wenn der erste Schieber (24) und/oder der zweite Schieber (30) in die Durchflussstellung verschoben werden.

6. Andockverschluss nach einem der vorherigen Ansprüche,
**dadurch gekennzeichnet, dass** zumindest einer der Dockingports (20, 26) ein Dockingport-Aufhängelement (50) aufweist.

7. Andockverschluss nach einem der vorherigen Ansprüche,
**dadurch gekennzeichnet, dass** zumindest einer der Endports (22, 28) ein Endport-Aufhängelement aufweist.

8. Andockverschluss nach den Ansprüchen 6 und 7,
**dadurch gekennzeichnet, dass** das Dockingport-Aufhängelement (50) und das Endport-Aufhängelement (52) jeweils eine Öffnung (60) umschließen, deren Ebene im Wesentlichen parallel zu einer Hauptdurchgangsrichtung (D) der Substanz zwischen der ersten Umhüllung (12) und der zweiten Umhüllung (16) verläuft.

9. Andockverschluss nach Anspruch 8,
**dadurch gekennzeichnet, dass** das Dockingport-Aufhängelement (50) und das Endport-Aufhängelement (52) ineinander einbringbar sind.

10. Andockverschluss nach einem der vorherigen Ansprüche,
**dadurch gekennzeichnet, dass** zumindest der erste Dockingport (20) und der zweite Dockingport (26) miteinander korrespondierende Positionierungsabschnitte (38) zum Positionieren der Dockingports (20, 26) relativ zueinander aufweisen.

11. Andockverschluss nach einem der vorherigen Ansprüche,
**dadurch gekennzeichnet, dass** zumindest der erste Dockingport (20) und der zweite Dockingport (26) Formschlussmittel (34) und/oder Reibschlussmittel (44) zum lösbaren Verbinden der Dockingports miteinander aufweisen.

12. Andockverfahren zum kontaminationsfreien Verbinden einer ersten flexiblen Umhüllung (12) mit einer zweiten flexiblen Umhüllung (16) mit einem Andockverschluss (10) nach einem der vorherigen Ansprüche, umfassend folgende Schritte:
- Bereitstellen einer ersten Verschlussvorrichtung (14) mit einem ersten Dockingport (20), einem ersten Endport (22) und einem ersten Schieber (24),
- Bereitstellen einer zweiten Verschlussvorrichtung (18) mit einem zweiten Dockingport (26), einem zweiten Endport (28) und einem zweiten Schieber (30),
- wobei sich die erste Verschlussvorrichtung (14) und die zweite Verschlussvorrichtung (18) in einer Andockstellung befinden, in welcher die erste Umhüllung (12) innerhalb der ersten Verschlussvorrichtung (12) von dieser und die zweite Umhüllung (16) innerhalb der zweiten Verschlussvorrichtung (18) von dieser verschlossen sind und in welcher der erste Schieber (24) am ersten Dockingport (20) und der zweite Schieber (30) am zweiten Dockingport (26) anliegen,
- Verbinden des ersten Dockingports (20) mit dem zweiten Dockingport (26),
- Verbinden des ersten Endports (22) mit dem zweiten Endport (28), und
- Verschieben des ersten Schiebers (24) und des zweiten Schiebers (30) in Richtung einer Durchflussstellung, in welcher der erste Schieber (24) am ersten Endport (22) und der zweite Schieber (30) am zweiten Endport (28) anliegen, wodurch die erste Umhüllung (12) und die zweite Umhüllung (16) geöffnet werden und ein von der ersten Verschlussvorrichtung (12) und der zweiten Verschlussvorrichtung (18) umschlossener Durchflusskanal (32) zum kontaminationsfreien Transport von Substanzen zwischen der ersten Umhüllung (12) und der zweiten Umhüllung (16) bereitgestellt wird.

13. Andockverfahren nach Anspruch 12, umfassend folgenden Schritt:
- Verbinden des ersten Schiebers (24) mit dem zweiten Schieber (30).

14. Erste flexible Umhüllung (12), insbesondere Packmittel für staubförmige, toxisch wirkende Feststoffe, wie Roh-, Hilfs- und Fertigstoffe in der chemischen und pharmazeutischen Industrie,
**dadurch gekennzeichnet, dass** die erste flexible Umhüllung (12) mit einer ersten Verschlussvorrichtung (14) eines Andockverschlusses (10) nach einem der Ansprüche 1 bis 11 verbunden ist, und mittels dieser verschließbar ist, wobei mittels des Andockverschlusses (10) eine zweite flexible Umhüllung (16) mittels eines Andockverfahrens nach einem der Ansprüche 12 oder 13 kontaminationsfrei an die erste flexible Umhüllung (12) andockbar und simultan gemeinsam öffenbar und wieder abdockbar und simultan wiederverschließbar ist.

15. Verwendung eines Andockverschlusses (10) nach einem der Ansprüche 1 bis 11 zum sicheren Handhaben von Substanzen, insbesondere von toxisch wirkenden, staubförmigen Feststoffen, bei der Teilentnahme aus flexiblen Umhüllungen (12, 16) wie Originärverpackungen zum Zwecke der Beprobung und/oder Verwiegung.

## Claims

1. Docking closure for the contamination free connection of a first flexible enclosure (12) to a second flexible enclosure (16), comprising
- a first closure device (14) which is connectable to or is connected to the first
enclosure (12), and
- a second closure device (18) which is connectable to or is connected to the second enclosure (12), wherein
- the first closure device (14) comprises a first docking port (20), a first end port (22) and a first slide (24), and
- the second closure device (18) comprises a second docking port (26), a second end port (28) and a second slide (30),
- the first slide (24) and the second slide (30) can be moved between a docking position and a flow through position, wherein in the docking position the first enclosure (12), on the inside of the first closure device (14), is closed by the latter and the second enclosure (16), on the inside of the second closure device (18), is closed by the latter,
- in the docking position, the first slide (24) rests against the first docking port (20) and the second slide (30) rests against the second docking port (26),
- the first docking port (20) and the second end port (28) are detachably attachable to each other, and
- when the first docking port (20) and the second docking port (26) are connected to each other, the first slide (24) and the second slide (30), when moved in the direction of the flow through position, in which the first slide (24) rests against the first end port (22) and the second slide (30) rests against the second end port (28), close the first enclosure (12) and the second enclosure (16) and proved a flow through channel (32), which is enclosed by the first closure device (14) and the second closure device (18), for the contamination free transport of substances between the first enclosure (12) and the second enclosure (16).

2. Docking closure in accordance with claim 1,
**characterized in that** the first slide (24) and the second slide (30) are detachably attachable to each other.

3. Docking closure in accordance with either of the preceding claims,
**characterized in that** the first slide (24) and/or the second slide (30) each comprise an actuation segment (46).

4. Docking closure in accordance with any of the preceding claims,
**characterized in that** the docking closure (10) comprises at least one sliding closure (56) for connecting the first closure device (14) to the second closure device (18) which can be closed by moving the first slide (24) and/or the second slide (30) into the flow through position.

5. Docking closure in accordance with claim 4,
**characterized in that** the sliding closure (56) includes sealing means (66) which are brought into a sealing contact with each other when the first slide (24) and/or the second slide (30) are moved into the flow through position.

6. Docking closure in accordance with any of the preceding claims,
**characterized in that** at least one of the docking ports (20, 26) comprises a docking suspension element (50).

7. Docking closure in accordance with any of the preceding claims,
**characterized in that** at least one of the end ports (22, 28) comprises an end port suspension element (52).

8. Docking closure in accordance with the claims 6 and 7,
**characterized in that** both the docking port suspension element (50) and the end port suspension element (52) each enclose an opening (60), the plane of which extends essentially parallel to a main direction of passage (D) of the substance between the first enclosure (12) and the second enclosure (16).

9. Docking closure in accordance with claim 8,
**characterized in that** the docking port suspension element (50) and the end port suspension element (52) can be inserted into each other.

10. Docking closure in accordance with any of the preceding claims,
**characterized in that** the first docking port (20) and the second docking port (26), comprise mutually corresponding positioning segments (38) for positioning the docking ports (20, 26) relative to each other.

11. Docking closure in accordance with any of the preceding claims,
**characterized in that** at least the first docking port (20) and the second docking port (26) comprise form-fit means (34) and/or friction engaging means (44) for the detachable attachment of the docking ports (20, 26) to each other.

12. Docking method for the contamination-free connecting of a first flexible enclosure (12) to a second flexible enclosure (16), having a docking closure (10) in accordance with any of the preceding claims, comprising the following steps:
- providing a first closure device (14) having a first docking port (20), a first end port (22) and a first slide (24),
- providing a second closure device (18) having a second docking port (26), a second end port (28) and a second slide (30),
- wherein the first closure device (14) and the second closure device (18) are in a docking position in which the first enclosure (12), on the inside of the first closure device (14) is closed by the latter and in which the second enclosure (16), on the inside of the second closure device (18), is closed by the latter, and in which the first slide (24) rests against the first docking port (20) and the second slide (30) rests against the second docking port (26),
- connecting the first docking port (20) to the second docking port (26),
- connecting the first end port (22) to the second end port (28), and
- moving the first slide (24) and the second slide (30) in the direction of a flow through position in which the first slide (24) rests against the first end port (22) and the second slide (30) rests against the second end port (28), by means of which the first enclosure (12) and the second enclosure (16) are opened and a flow through channel (32) enclosed by the first closure device (12) and the second closure device (18) is provided for the contamination free transport of substances between the first enclosure (12) and the second enclosure (16).

13. Docking method in accordance with claim 12, further comprising the following step:
- connecting the first slide (24) to the second slide (30).

14. First flexible enclosure (12), in particular packaging means for dust-like, toxic solids such as raw, process and finished materials for chemical and pharmaceutical industries,
**characterized in that** the first flexible enclosure (12) is connected to a first closure device (14) of a docking closure (10) in accordance with any of claims 1 to 11, and can be closed by means of the latter, whereby, by means of the docking closure (10) a second flexible enclosure (16) can be docket, contamination free, onto the first flexible enclosure (12) by means of a docking method in accordance with either of claims 12 or 13 and, simultaneously, can be jointly opened and undocked and, simultaneously, can be again closed.

15. Use of a docking closure (10) in accordance with any of claims 1 to 11 for the safe handling of substances, in particular of toxic, dust-like solids during the partial removal from flexible enclosures (12, 16) such as original packaging for the purpose of sampling and/or weighing.

## Revendications

1. Verrouillage de couplage pour relier sans contamination une première enveloppe flexible (12) à une seconde enveloppe flexible (16) comprenant :
- un premier dispositif de verrouillage (14) qui peut être relié à la première enveloppe (12) ou est relié à celle-ci, et
- un second dispositif de verrouillage (18) qui est relié à la seconde enveloppe (16) ou peut être relié à celle-ci,
- le premier dispositif de verrouillage (14) ayant un premier port d'accueil (20), un premier port terminal (22) et un premier coulisseau (24), et
- le second dispositif de verrouillage (18) ayant un second port d'accueil (26), un second port terminal (28) et un second coulisseau (30),
- le premier coulisseau (24) et le second coulisseau (30) étant coulissant entre une position de couplage et une position de passage,
* en position de couplage, la première enveloppe (12) est fermée dans le premier dispositif de verrouillage (14) par celui-ci et la seconde enveloppe (16) est dans le second dispositif de verrouillage (18) en étant fermé par celui-ci,
- en position de couplage le premier coulisseau (24) s'appuie sur le premier port de couplage (20) et le second coulisseau (30) sur le second port de couplage (26),
- le premier port d'accueil (20) et le second port d'accueil (26) pouvant être reliés l'un à l'autre de façon amovible,
- le premier port d'extrémité (22) et le second port d'extrémité (28) pouvant être reliés l'un à l'autre de manière amovible, et
- lorsque le premier port d'accueil (20) et le second port d'accueil (26) sont reliés l'un à l'autre, le premier coulisseau (24) et le second coulisseau (30) en coulissant dans la direction de la position passante dans laquelle le premier coulisseau (24) s'applique contre le premier port d'extrémité (22) et le second coulisseau (30) s'applique contre le second port d'extrémité (28), la première enveloppe (12) et la seconde enveloppe (16) s'ouvrent et réalisent un canal de passage (32) entouré par le premier dispositif de verrouillage (14) et le second dispositif de verrouillage (18) pour le transport sans contamination de substances entre la première enveloppe (12) et la seconde enveloppe (16).

2. Verrouillage de couplage selon la revendication 1,
**caractérisé en ce que**
le premier coulisseau (24) et le second coulisseau (30) sont reliés l'un à l'autre de manière amovible.

3. Verrouillage de couplage selon l'une des revendications précédentes,
**caractérisé en ce que**
le premier coulisseau (24) et/ou le second coulisseau (30) ont chacun un segment d'actionnement (46).

4. Verrouillage de couplage selon l'une des revendications précédentes,
**caractérisé en ce que**
le dispositif de verrouillage de couplage (10) comporte au moins une serrure coulissante (56) pour relier le premier dispositif de fermeture (14) avec le second dispositif de fermeture (18) qui, par coulissement du premier coulisseau (24) et/ou du second coulisseau (30) se ferme en position passante.

5. Verrouillage de couplage selon la revendication 4,
**caractérisé en ce que**
le verrouillage de coulisseau (56) comprend des moyens d'étanchéité (66) mis en contact d'étanchéité l'un avec l'autre lorsque le premier coulisseau (24) et/ou le second coulisseau (30) sont déplacés en position passante.

6. Verrouillage de couplage selon l'une des revendications précédentes,
**caractérisé en ce que**
au moins l'un des ports d'accueil (20, 26) a un élément d'accrochage du port de couplage (50).

7. Verrouillage de couplage selon l'une des revendications précédentes,
**caractérisé en ce que**
au moins l'un des ports d'extrémité (22, 28) comporte un élément d'accrochage de port d'extrémité.

8. Verrouillage de couplage selon les revendications 6 et 7,
**caractérisé en ce que**
l'élément de suspension de port de couplage (50) et l'élément de suspension de port d'extrémité (52) entourent chacun un orifice (60) dont les plans sont pratiquement parallèles à une direction principale transversante (D) qui passe dans la substance entre la première enveloppe (12) et la seconde enveloppe (16).

9. Verrouillage de couplage selon la revendication 8,
**caractérisé en ce que**
l'élément de suspension de port de couplage (50) et l'élément de suspension de port d'extrémité (52) peuvent être mis l'un dans l'autre.

10. Verrouillage de couplage selon l'une des revendications précédentes,
**caractérisé en ce que**
au moins le premier port de couplage (20) et le second port de couplage (26) ont des segments de positionnement (38) qui se correspondent pour positionner les ports de couplage (20, 26) l'un par rapport à l'autre.

11. Verrouillage de couplage selon l'une des revendications précédentes,
**caractérisé en ce que**
au moins le premier port de couplage (20) et le second port de couplage (26) comportent des moyens de liaison par la forme (34) et/ou des moyens de liaison par frottement (44) reliant de manière amovible les ports de couplage l'un avec l'autre.

12. Procédé de couplage pour relier sans contamination une première enveloppe flexible (12) à une second enveloppe flexible (16) avec une fermeture de couplage (10) selon l'une des revendications précédentes comprenant les étapes suivantes consistant à :
- fournir un premier dispositif de verrouillage (14) avec un premier port de couplage (20), un second port de couplage (22) et un premier coulisseau (24),
- fournir un second dispositif de verrouillage (18) avec un second port de couplage (26), un second port d'extrémité (28) et un second coulisseau (30),
- le premier dispositif de verrouillage (14) et le second dispositif de verrouillage (18) se trouvent dans une position de couplage dans laquelle la première enveloppe (12) est fermée dans le premier dispositif de verrouillage (14) par celui-ci et la seconde enveloppe (16) est fermée dans le second dispositif de verrouillage (18) par celui-ci et dans laquelle le premier coulisseau (24) s'applique contre le premier port de couplage (20) et le second coulisseau (30) se trouve au second port de couplage (26),
- relier le premier port de couplage (20) au second port de couplage (26),
- relier le premier port d'extrémité (22) au second port d'extrémité (28), et
- coulisser le premier coulisseau (24) et le second coulisseau (30) en direction d'une position passante dans laquelle le premier coulisseau (24) s'applique contre le premier port d'extrémité (22) et le second coulisseau (30) s'applique contre le second port d'extrémité (28) de façon à ouvrir la première enveloppe (12) et la seconde enveloppe (16) et un canal de passage (32) entouré par le premier dispositif de verrouillage (14) et le second dispositif de verrouillage (18) assurent le transport sans contamination de substances entre la première enveloppe (12) et la seconde enveloppe (16).

13. Procédé selon la revendication 12,
comprenant l'étage suivante consistant à :
- relier le premier coulisseau (24) au second coulisseau (30).

14. Première enveloppe flexible (12), notamment moyen d'emballage pour les matières solides à l'état de poussière, ayant un effet toxique tel que les matières brutes, les matières auxiliaires, les matières premières et les produits finis de l'industrie chimique et pharmaceutique,
procédé **caractérisé en ce que**
la première enveloppe flexible (12) est reliée à un dispositif de verrouillage de couplage (14) selon l'une des revendications 1 à 11 et peut être ainsi fermée,
- le verrouillage de couplage (10) couplant une seconde enveloppe flexible (16) à l'aide d'un procédé de couplage selon l'une des revendications 12 ou 13, sans contamination, à la première enveloppe flexible (12) et en même temps s'ouvrant en commun et qui peuvent de nouveau être couplées et se verrouiller simultanément.

15. Application d'un verrouillage de couplage (10) selon l'une des revendications 1 à 11, pour manipuler en sécurité des substances, notamment des matières solides à l'état de poussières, à effet toxique lorsqu'on enlève partiellement dans les enveloppes flexibles (12, 16) des emballages d'origine pour les essayer et/ou les peser.
